# DEMANDE DE BREVET EUROPEEN

(11) **EP 0 933 434 A1**
(43) Date de publication de la demande: **04.08.1999**
(21) Numéro de dépôt: 98870097.7
(22) Date de dépôt: 28.04.1998
(51) Int. Cl.: C21B 13/10

(54) **Procédé de réduction d'oxydes de fer et installation à cet effet**

(30) Priorité: 28.01.1998 EP 98200242
(71) Demandeur: SIDMAR N.V., B-9042 Gent (BE)
(72) Inventeur: Monteyne, Guido, 9971 Lembeke (BE)
(74) Mandataire: Van Malderen, Joelle

(57) **Abrégé**

Procédé amélioré de réduction directe d'oxydes métalliques dans un four continu, de préférence un four à sole tournante, caractérisé en ce que l'on dépose sur la sole, de préférence chauffée à une température supérieure à 800 °C, une première couche légèrement préchauffée de charbon, de préférence du charbon à forte teneur en constituants volatils, et en ce qu'on recouvre de préférence cette couche par une couche légèrement préchauffée d'un mélange d'oxydes métalliques/charbon laquelle est de préférence à son tour recouverte par une couche d'oxydes métalliques préchauffée à une température de l'ordre de 800 °C afin de faire débuter immédiatement la réduction des oxydes métalliques sous l'effet du passage forcé des constituants volatils libérés par l'apport de chaleur de la sole chauffée au travers de la couche d'oxydes métalliques préchauffée, en particulier de l'hydrogène, et en ce que, par le biais d'équipements grâce auxquels la couche supérieure est mélangée à la couche sous-jacente, progressivement à des niveaux de plus en plus bas au fur et à mesure de la rotation de la sole, on homogénéise la charge et on étend la réduction progressivement à l'ensemble de la charge.

## Description

### Objet de l'invention

La présente invention concerne un procédé amélioré de réduction directe d'oxydes métalliques, notamment d'oxydes de fer, par du charbon, qui permet d'obtenir une productivité accrue et une consommation spécifique de charbon réduite. Elle concerne également une installation à cet effet et l'éponge métallique pouvant être produite.

### Buts de l'invention

L'invention vise d'une part à augmenter les vitesses de réaction par un mélange de la charge, par une augmentation de l'efficacité du rayonnement du four et par une augmentation de la surface d'échange thermique avec l'atmosphère du four, et d'autre part à utiliser de manière plus efficace les capacités réductives des constituants volatils du charbon par leur passage forcé dans une couche d'oxydes métalliques préchauffée. Conjointement, ces conditions opératoires devraient également conduire à une augmentation importante de la capacité de production par unité de surface et à une réduction de la production de dioxyde de carbone rejeté dans l'atmosphère par quantité unitaire d'oxydes métalliques réduits obtenue.

L'invention a également pour objet de produire une éponge métallique présentant une meilleure homogénéité du degré de réduction dans la masse par rapport aux produits résultant des techniques connues.

### Arrière-plan technologique à la base de l'invention et état de la technique

La réduction directe d'oxydes métalliques, notamment des minerais mais également de différents oxydes métalliques recyclés, s'est largement développée ces dernières années.

Dans le document EP 0 692 543 A1, on décrit un procédé pour fabriquer une éponge de fer à basse teneur en soufre.

Dans ce document, on indique qu'on dispose sur une sole mobile, une charge non préchauffée composée de couches superposées de matières finement divisées, au moins une de ces couches étant constituée essentiellement d'oxydes de fer et au moins une autre couche étant formée par un mélange d'un agent réducteur carboné solide et d'un agent désulfurant. La réduction des oxydes de fer est principalement réalisée au moyen du monoxyde de carbone en provenance du charbon, les constituants volatils du charbon ne participant que partiellement à la réduction des oxydes de fer.

De même, dans la production d'éponges de fer à partir de pellets formés d'un mélange d'oxydes de fer et de charbon, on effectue la réduction des oxydes de fer principalement au moyen du monoxyde de carbone en provenance du charbon, les constituants volatils du charbon ne prenant que partiellement part au processus de réduction.

### Eléments caractéristiques de l'invention

L'invention porte sur un procédé amélioré de réduction directe d'oxydes métalliques dans un four continu, de préférence un four à sole tournante, de préférence avec une sole chauffée à une température supérieure à 800 °C, caractérisé en ce que l'on dépose sur la sole une première couche de charbon, de préférence du charbon à forte teneur en constituants volatils et préchauffé à une température inférieure à 150°C autorisant encore une alimentation fiable du four, et en ce que l'on recouvre cette couche par une couche constituée d'un mélange d'oxydes métalliques et de charbon légèrement préchauffée à une température inférieure à 200°C, laquelle est de préférence recouverte par une couche d'oxydes métalliques de préférence préchauffée à une température évitant le grossissement exagéré des particules mais suffisante pour permettre une réduction efficace des oxydes métalliques (soit par exemple de l'ordre de 800 °C), afin de porter rapidement le charbon à une température de dégagement des constituants volatils et sous l'effet des constituants volatils ainsi libérés, en particulier de l'hydrogène, de réaliser la réduction des oxydes métalliques. Dans une application particulière la couche du mélange oxydes métalliques/charbon et la couche d'oxydes métalliques est remplacée par une couche de pellets.

Le four est pourvu d'équipements grâce auxquels la charge est mélangée progressivement à des niveaux de plus en plus bas au fur et à mesure de la rotation de la sole.

La description qui suit fera référence au terme général d'oxydes métalliques. Ce terme englobe aussi bien les minerais métalliques habituels que les oxydes de métaux de récupération provenant des processus sidérurgiques, qu'un mélange de ces sources d'oxydes avec des fines de coke ou avec du charbon.

On entend par charbon toute matière carbonée à l'état solide.

Les conditions opératoires sont choisies de manière à réaliser un compromis entre, d'une part, la nécessité de réaliser aussi vite que possible une température élevée et homogène de la charge, et d'autre part la nécessité de ne mettre progressivement en contact avec la couche d'oxydes métalliques ou la couche supérieure du mélange oxydes métalliques/charbon que la partie supérieure de la couche sous-jacente en évitant d'y incorporer des couches inférieures plus froides de façon à ce que la température du nouveau mélange ainsi obtenu soit supérieure à 600°C.

D'autre part, pour ce qui concerne la couche supérieure de la charge, il faut éviter que celle-ci ne se vitrifie, par exemple par formation de silicates du type fayalite qui ont un effet d'inhibition de la réduction.

Le but final est bien entendu d'obtenir en un temps d'élaboration aussi court que possible, le temps d'élaboration étant déterminé par le point le plus froid de la charge, une éponge métallique présentant de meilleures caractéristiques d'homogénéité comparée aux éponges produites par les techniques de réduction de l'état de la technique, ces dernières présentant généralement l'inconvénient d'entraîner la production d'un produit avec des taux de réduction des oxydes métalliques variables.

L'invention repose sur l'observation que, dans le procédé de l'état de la technique, une grande partie des constituants volatils du charbon, en particulier l'hydrogène et le méthane, ne sont pas mis en oeuvre pour leur capacité réductive, cette réduction étant en fait opérée principalement par de l'oxyde de carbone dont les cinétiques de réduction sont nettement moins favorables que celles de l'hydrogène. Il est donc apparu qu'il serait particulièrement avantageux que les constituants volatils précités soient progressivement libérés et, de par leur passage forcé au travers d'une couche contenant des oxydes métalliques soient mis en contact avec les oxydes métalliques dans des conditions opératoires, en particulier la température des oxydes métalliques et les mélanges successifs des réactifs, telles qu'ils participent à la réduction de ceux-ci. Ceci implique que l'oxyde métallique et les gaz réducteurs libérés soient mis en contact à des températures aussi élevées que possible, sans cependant perturber le déroulement du processus de réduction.

Il est apparu avantageux de mélanger de la chaux aux oxydes métalliques, d'une part celle-ci réagissant comme catalyseur de la réaction, d'autre part celle-ci évitant des phénomènes d'adhérence des éponges métalliques. De plus, la chaux contribue généralement à la désulfurisation de la fonte et à la formation d'un laitier ou de scories plus fluides.

Avantageusement, l'opération telle que décrite n'implique le dépot sur la sole que d'une couche de charbon et d'une couche d'oxydes métalliques, ou d'une couche formée d'un mélange de charbon et d'oxydes métalliques et d'une couche d'oxydes métalliques.

La sole est alimentée par des couches disposées horizontalement.

L'invention porte également sur une installation constituée par un four à sole tournante comportant un équipement permettant de réaliser le mélange progressif d'une couche supérieure et d'une couche sous-jacente, constitué de préférence sous forme de socs disposés à la manière d'un râteau pénétrant dans la couche supérieure et dans la couche sous-jacente. Ces râteaux sont disposés radialement dans le four, le premier râteau étant disposé dans la zone d'alimentation du four. Les premiers râteaux ont un nombre plus élevé de socs de dimensions plus petites qui sont disposés à des profondeurs progressivement croissantes à mesure que la matière progresse sous l'effet de la rotation de la sole.

Les sillons, de forme triangulaire, recouvrent l'ensemble de la surface de la charge.

Les socs des râteaux dans une première zone du four sont fixes, de préférence décalés, c'est-à-dire disposés en quinconce par rapport aux sillons précédents. Le mouvement de la matière sur la sole provoque un mélange (c'est-à-dire un brassage) et la formation d'un nouveau sillon.

Dans la partie suivante du four, des râteaux d'un autre type que les précédents avec un nombre plus limité de socs, sont mobiles et soumis à une translation radiale. Ces râteaux sont disposés sur le parcours de la charge de façon à ce que chaque zone de la charge soit retournée endéans un temps défini, de préférence inférieur à deux minutes. Les socs des premiers râteaux mobiles attaquent progressivement la charge à des niveaux de plus en plus bas, tandis que les râteaux suivants pénêtrent dans toute sa profondeur. De cette manière on obtient une homogénéisation plus rapide de la charge, de même on évite l'apparition en surface de la charge d'une plaque d'oxydes métalliques réduits trop épaisse, résistante, difficile à morceler et difficile à évacuer.

L'extrémité des socs est conformée de manière à provoquer un retournement de la matière afin d'assurer une meilleure homogénéisation. Cette extrémité peut, si on le souhaite, être refroidie (par une circulation interne d'un liquide réfrigérant par exemple).

La distribution des râteaux dans les différentes zones du four peut se faire de façon linéaire sur la longueur de passage dans une zone du four. Elle se fera de préférence de façon non linéaire et sera dépendante de la température de surface ainsi que du gradient de température dans la charge.

La quantité de charbon se détermine par la quantité stoechiométrique nécessaire pour provoquer la réduction complète des oxydes métalliques présents, diminuée d'une quantité correspondant à l'action réductrice des éléments volatiles, et éventuellement majorée d'une quantité nécessaire à la fusion de l'éponge et à l'alliage ultérieur.

Généralement, les extrémités des socs des râteaux fixes pénètrent progressivement dans la couche sous-jacente à raison d'environ 3 à 6 mm. En d'autres mots, les extrémités des socs du premier râteau pénètrent de 3 à 6 mm dans la couche sous-jacente à la couche d'oxydes métalliques de surface, le second râteau pénètre de 3 à 6 mm supplémentaires, et ainsi de suite jusqu'à l'homogénéisation de la charge.

Généralement, les extrémités des socs des premiers râteaux mobiles pénètrent progressivement dans la charge à raison d'environ 20 mm par râteau ce qui morcelle avantageusement les plaques d'oxydes réduits en morceaux facilitant de la sorte la métallisation en profondeur. Les socs des râteaux mobiles suivant pénétrant dans l'entièreté de la charge assurant une homogénéisation de celle-ci.

Les socs des râteaux sont conçus de tel sorte qu'à chaque passage de la charge une partie de celle-ci soit retournée, la couche supérieure de la charge en contact avec l'atmosphère du four, au début constituée d'oxydes métalliques ensuite du mélange oxydes métalliques/charbon et finalement d'oxydes métalliques réduits, est descendue tandis que la couche sous-jacente est remontée.

Les sillons créés augmentent de l'ordre de 25% la surface de la charge à l'interface avec l'atmosphère du four, ce qui a pour effet d'augmenter de façon non négligeable le transfert thermique de l'atmosphère du four vers la masse de la charge.

Le mélange progressif de la couche d'oxydes métalliques avec la couche sous-jacente dont la température est nécessairement plus élevée dans la zone proche de l'interface oxydes métalliques/charbon que dans les couches plus éloignées, se traduit par les conséquences suivantes :
- un plus grand transfert thermique de par une augmentation de la surface à l'interface couche supérieure/atmosphère du four;
- la meilleure conductibilité thermique de la couche d'oxydes métalliques, présents au début en une seule couche dans la partie supérieure de la charge et par après progressivement dans le mélange, contribue à un meilleur transfert thermique que celui des procédés à couches multiples, sans que l'agent réducteur, en l'occurrence le charbon, qui est moins bon conducteur thermique, ne perturbe ce processus;
- le mélange progressif des couches constituant la charge permet la réalisation rapide d'une homogénéisation de la température de cette charge;
- les oxydes métalliques atteignent très rapidement les températures élevées où leur réactivité est plus forte, ce qui augmente l'efficacité du processus de réduction et diminue la durée opératoire;
- les constituants volatils libérés progressivement, générés par le charbon porté progressivement à plus haute température, sont utilisés de manière efficace et immédiate comme agent de réduction;
- la réduction à l'aide d'hydrogène se produit immédiatement et est optimalisée, ce qui permet de mettre à profit sa cinétique réactionnelle plus forte que celle du gaz CO;
- la réduction par le CO est rendue plus efficace de par ce que la couche supérieure plus chaude est progressivement mélangée à la couche directement sous-jacente portée à la température adéquate et non aux couches plus profondes encore trop froides;
- Dans le cas où la première couche est une couche de charbon, son contact avec la sole chauffée à plus de 800 °C, provoque une libération rapide des constituants volatils de cette partie de la couche, et, de par son passage forcé au travers de la couche d'oxydes métalliques préchauffés, son utilisation immédiate comme agent réducteur;
- les trop hautes températures en surface sont évitées, et de la sorte, il n'y a pas production de fayalite;
- On évite l'apparition en surface de la charge d'une plaque d'oxydes métalliques réduits trop épaisse, résistante, difficile à morceler et difficile à évacuer.
- Dans le cas où la charge est formée de deux couches, la zone de chargement du four est plus compacte et en conséquence, le volume disponible pour la réduction plus important;
- le four, pour une production identique, sera moins volumineux que celui des autres procédés par exemple ceux travaillant avec une charge à multiple couches.

En principe, l'agent réducteur est du charbon avec une teneur élevée en constituants volatils, de préférence avec une teneur supérieure à 25% en constituants volatils.

Le four est généralement maintenu à une température de coupole de l'ordre de 1300 à 1450 °C, de préférence de l'ordre de 1400 °C, par exemple par des brûleurs installés dans la voûte et dans les parois du four à sole mobile.

Les mélanges successifs des couches supérieures aux couches sous-jacentes ont pour conséquence que la température maximale atteinte ne dépasse pas 1100 à 1200 °C en surface.

Le procédé décrit présente l'avantage que, par rapport à d'autres techniques comparables basées sur une réduction ou une préréduction directe à l'aide de charbon, l'utilisation maximale des propriétés réductives pour la réduction de l'oxyde métallique, d'une part de par l'hydrogène libéré par les constituants volatils et d'autre part de par la plus grande vitesse de réaction du CO résultant de l'homogénéisation de la charge, diminue fortement la consommation énergétique par tonne de métal réduit. L'utilisation de l'hydrogène comme agent réducteur contribue à une utilisation plus efficace du charbon tandis que l'homogénéisation de la température contribue à un meilleur déroulement opératoire, en particulier à un déroulement opératoire plus rapide et plus efficace, à une augmentation considérable de l'épaisseur de la charge, à un encombrement plus réduit du four et à une optimalisation des échanges thermiques. En principe, il devient possible de produire moins de dioxyde de carbone par masse unitaire de métal réduit produit.

Les techniques employées permettent également d'augmenter l'homogénéisation des charges constituées de pellets, ce qui contribue à une augmentation considérable de l'épaisseur de la charge, à un déroulement opératoire plus rapide et plus efficace, à un encombrement plus réduit du four et à une optimalisation des échanges thermiques.

### Brève description des figures

L'invention sera décrite en référence à une forme d'exécution préférée de l'invention illustrée dans les dessins annexés.
- La figure 1: représente une vue schématique d'une distribution des râteaux dans un four rotatif.
- La figure 2: représente la position des socs dans la charge.
- La figure 3: représente les sillons résultant du passage des socs des râteaux fixes dans la charge.
- La figure 4: représente une vue schématique d'un soc de râteau fixe.
- La figure 5: représente une vue schématique d'un soc de râteau mobile.
- La figure 6: représente schématiquement l'attaque des sillons par des socs mobiles.

### Description d'une foie d'exécution préférée de l'invention

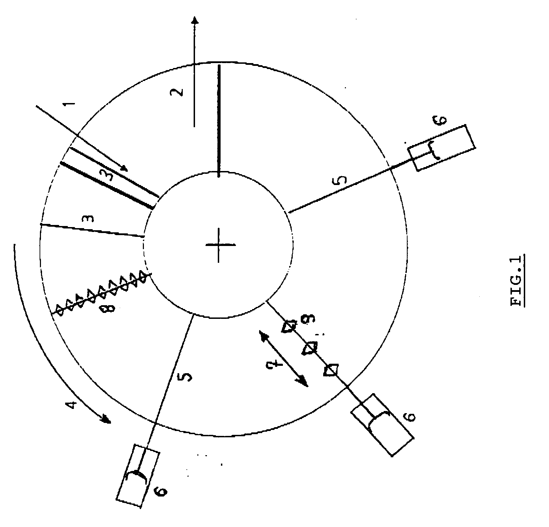

Le principe de fonctionnement du procédé est illustré à la figure 1.

Dans la figure 1, on illustre en 1 la zone de chargement et en 2 la zone d'évacuation de la sole tournante, celle-ci effectuant un mouvement dans le sens anti-horlogique représenté par la flèche 4. Les râteaux supportant les socs fixes 8 ont reçu le repère de référence 3, tandis que les râteaux supportant les socs mobiles 9 ont reçu le repère de référence 5. La flèche 7 représente le mouvement de translation des socs, et la référence 6 les actionneurs.

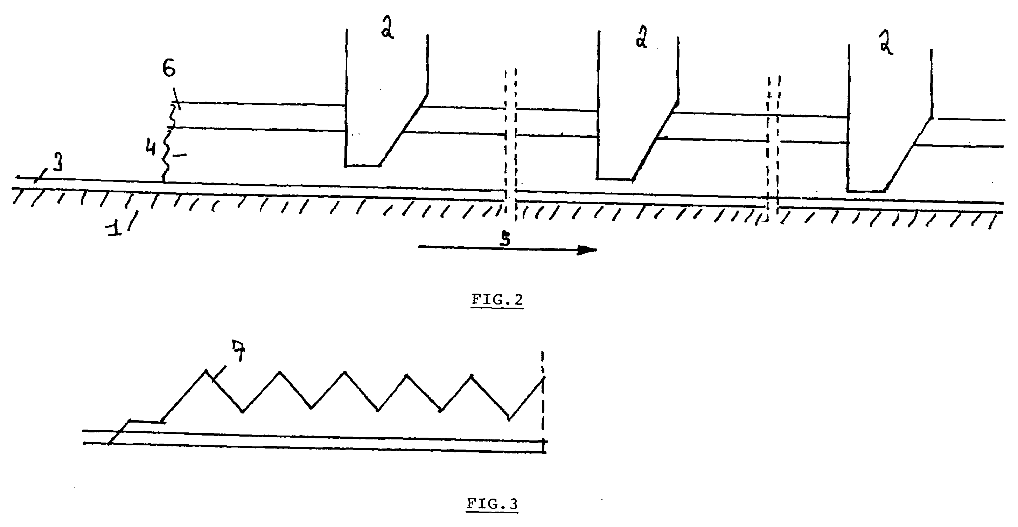

Dans la figure 2, on indique par le repère 1 la sole du four, un soc de râteau de mélange portant le repère 2. Le mouvement rotatif de la sole vis-à-vis des râteaux est illustré par la flèche 5.

Les repères 3, 4 et 6 illustrent respectivement la charge de charbon sur la sole, le mélange oxydes métalliques/charbon et la charge d'oxydes métalliques recouvrant celle-ci.

On notera que trois râteaux de mélange sont représentés chaque fois par un soc, ceux-ci pénétrant de plus en plus profondément dans la charge de la gauche vers la droite.

La figure 3 illustre la forme des sillons 7 résultant du passage des socs dans la charge.

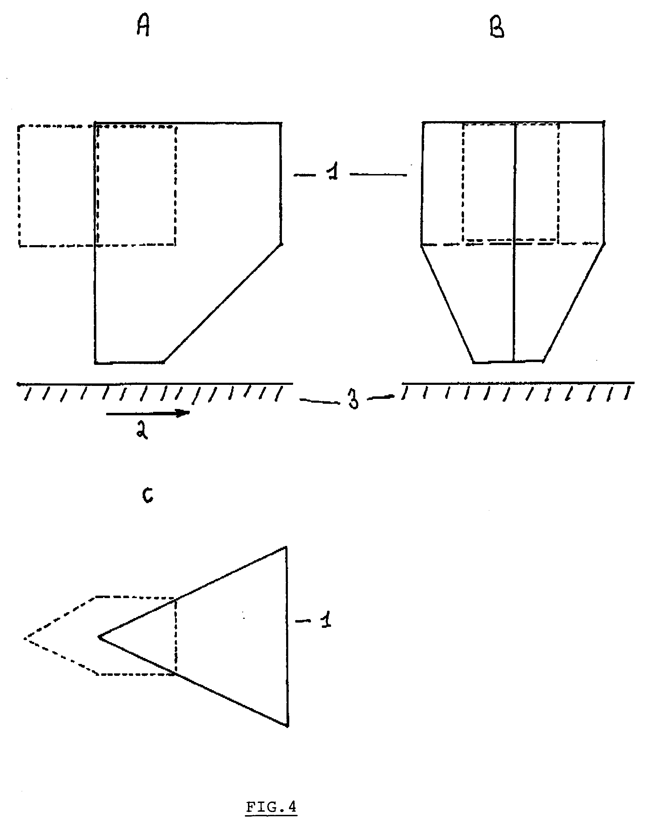

La figure 4 illustre schématiquement la forme d'un soc fixe ayant le repère 1. A représente une projection verticale de côté, B une projection verticale de derrière et C une projection horizontale. Les repères 2 et 3 représentent respectivement le mouvement de la charge et la sole. Le soc dispose dans sa partie supérieure d'une avancée, pénétrant en premier dans le sillon précédent et déplaçant le sommet du sillon, partie la plus chaude, dans le coeur du nouveau sillon en formation.

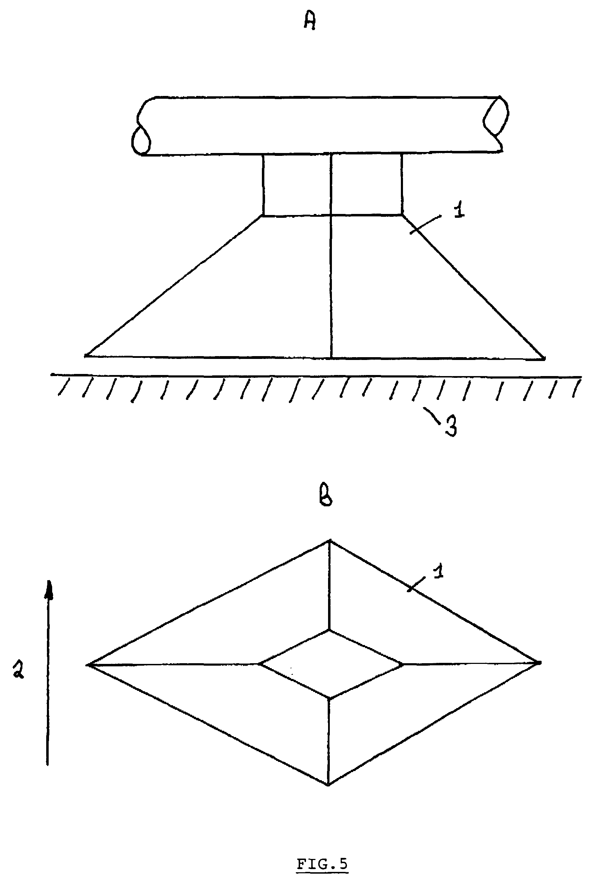

La figure 5 illustre schématiquement la forme d'un soc mobile ayant le repère 1. A représente une projection verticale de face tandis que B représente une projection horizontale. Les repères 2 et 3 représentent respectivement le mouvement de la charge et la sole.

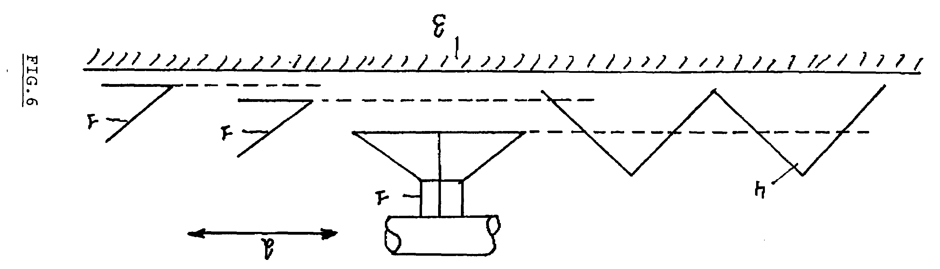

La figure 6 illustre schématiquement l'attaque des sillons (repère 4), par les socs (repère 1) des premiers râteaux mobiles. Les repères 3 et 2 représentent respectivement la sole et le mouvement de translation des râteaux.

## Revendications

1. Procédé amélioré de réduction directe d'oxydes métalliques dans un four continu, de préférence un four à sole tournante, caractérisé en ce que l'on dépose sur la sole, de préférence chauffée à une température supérieure à 800 °C, une première couche légèrement préchauffée de charbon, de préférence du charbon à forte teneur en constituants volatils, et en ce qu'on recouvre de préférence cette couche par une couche légèrement préchauffée d'un mélange d'oxydes métalliques/charbon laquelle est de préférence à son tour recouverte par une couche d'oxydes métalliques préchauffée à une température de l'ordre de 800 °C afin de faire débuter immédiatement la réduction des oxydes métalliques sous l'effet du passage forcé des constituants volatils libérés par l'apport de chaleur de la sole chauffée au travers de la couche d'oxydes métalliques préchauffée, en particulier de l'hydrogène, et en ce que, par le biais d'équipements grâce auxquels la couche supérieure est mélangée à la couche sous-jacente, progressivement à des niveaux de plus en plus bas au fur et à mesure de la rotation de la sole, on homogénéise la charge et on étend la réduction progressivement à l'ensemble de la charge.

2. Procédé selon la revendication 1, caractérisé en ce que l'on met en oeuvre les oxydes métalliques à une température d'alimentation aussi élevée que possible tout en évitant, par l'action de râteaux fixes distribués de façon judicieuse, la formation de composés tels que la fayalite qui seraient préjudiciables à la réduction.

3. Procédé selon la revendication 1 ou 2 caractérisée en ce que par un mouvement radial de râteaux on prévient la formation en surface de la charge d'une plaque de métal réduits épaisse, résistante, difficile à morceler et difficile à évacuer.

4. Procédé selon la revendication 1 à 3, caractérisé en ce que l'on réalise ledit contact à une température aussi élevée que possible sans provoquer un refroidissement important de la zone de mélange par suite de l'apport dans cette zone, d'une couche sous-jacente à plus basse température.

5. Procédé selon l'une quelconque des revendications 1 à 4, caractérisé en ce que l'on met en oeuvre le charbon et le mélange oxydes métalliques/charbon à l'état préchauffé à une température aussi élevée que possible sans dépasser respectivement une valeur de l'ordre de 150 et de 200 °C.

6. Procédé selon l'une quelconque des revendications 1 à 5, caractérisé en ce que les oxydes métalliques mis en oeuvre sont des minerais métalliques ou des oxydes métalliques recyclés provenant par exemple des hauts fourneaux, des aciéries, des fours électriques et des laminoirs.

7. Procédé selon l'une quelconque des revendications 1 à 6, caractérisé en ce que l'on mélange de la chaux à la charge.

8. Procédé selon l'une quelconque des revendications 1 à 7, caractérisé en ce que l'on dépose sur la sole une seule couche de charbon et une seule couche d'oxydes métalliques sur la couche de charbon.

9. Installation constituée par un four à sole tournante comportant un équipement permettant de réaliser le mélange progressif d'une couche supérieure et d'une couche sous-jacente, constitué de préférence sous forme de socs disposés à la manière des dents d'un râteau pénétrant dans la charge, dans une première zone du four des râteaux fixes étant disposés radialement dans le four et les socs de râteaux successifs étant disposés à des profondeurs progressivement croissantes à mesure que la matière progresse sous l'effet de la rotation de la sole.

10. Installation selon la revendications 9, caractérisée en ce que les socs sont décalés, c'est-à-dire disposés en quinconce par rapport aux socs du râteau précédent et aux socs du râteau suivant.

11. Installation selon les revendications 9 et 10, caractérisée en ce que chacun des socs du râteau agit à la manière d'un soc de charrue, les socs étant de préférence conformés de manière à provoquer un retournement de la matière de sorte que le manteau du sillon, partie la plus chaude, se retrouve au coeur de la base du nouveau sillon créé, afin d'assurer une meilleure homogénéisation.

12. Installation selon l'une quelconque des revendications 9 à 11, caractérisée en ce que les socs créent sur la surface de la charge des sillons triangulaires qui augmentent la surface à l'interface avec l'atmosphère du four, réalisant de ce fait un plus grand transfert thermique du four vers la charge.

13. Installation selon l'une quelconque des revendications 11 ou 12, caractérisée en ce que les extrémités des socs des râteaux à socs fixes pénètrent dans la charge progressivement d'un râteau à l'autre à raison d'environ 3 à 6 mm.

14. Installation selon l'une quelconque des revendications 9 à 13, caractérisée en ce que les extrémités des socs des premiers râteaux mobiles pénètrent dans la charge progressivement d'un râteau à l'autre à raison de maximum 20 mm, assurant ainsi un morcellement des plaques d'oxydes métalliques réduits et assurant une métallisation plus profonde et plus homogène.

15. Installation selon l'une quelconque des revendications 9 à 14, caractérisée en ce que le four est maintenu à une température de coupole de l'ordre de 1300 à 1450 °C, de préférence de l'ordre de 1400 °C, par des brûleurs installés sur les parois de côtés du four à sole mobile.

16. Eponge métallique obtenue par le procédé d'une quelconque des revendications 1 à 8 et/ou à l'aide de l'installation selon l'une quelconque des revendications 9 à 15, caractérisée par une homogénéité des taux de réduction dans la masse, supérieure à celle obtenue par les procédés de l'état de la technique, ainsi que par un temps de réduction court.
